# EUROPEAN PATENT APPLICATION

(11) **EP 1 113 621 A2**
(43) Date of publication of application: **04.07.2001**
(21) Application number: 00309343.2
(22) Date of filing: 24.10.2000
(51) Int. Cl.: H04L 12/28

(54) **Method for network access**

(30) Priority: 29.12.1999 US 474085
(71) Applicant: AT&T Corp., New York, NY 10013-2412 (US)
(72) Inventor: Bhagavath, Vijay K., Canoga Park, CA 91304 (US); Sahinoglu, Zafer, Clifton, NJ 07012 (US)
(74) Representative: Asquith, Julian Peter

(57) **Abstract**

An apparatus and method for selecting an architecture mode of a system for accessing a network (120). A request is received at a server from a subscriber. An architectural mode of a system is changed to at least one of a bridged mode and a routed mode in response to the request. The server may be a web server. The system may include customer premises equipment or digital subscriber line access multiplexer. An Internet protocol address, a virtual circuit identifier and a permanent virtual circuit identifier may be replaced with related addresses and identifiers on the system. An Internet protocol routing table or an asynchronous transfer mode permanent virtual circuit list may be updated. A simple network management protocol server may be informed of the request. The request may be received from a web page that includes at a personal identification number entry selection, a routed architectural mode selection or a bridged architectural mode selection.

## Description

### BACKGROUND OF THE INVENTION

### 1. Field of Invention

The present invention is directed to a method (and apparatus) for selecting an architecture mode of a system for accessing a network.

### 2. Description of Related Art

Presently, subscribers to network access systems may use specialized equipment such as modems, Customer Premises Equipment (CPE), Ethernet cards, or the like to access a network or other like system. This equipment may be designed to accomplish a specific access method to a particular system.

For example, a bridged mode CPE may provide layer-2 or Media Access Control connectivity in a bridged mode system from a connected subscriber personal computer at the CPE to a router in the system. A routed mode CPE may provide layer-3 or network layer connectivity in a routed mode system from a connected subscriber personal computer at the CPE to a router in the system.

The routed mode system may utilize IP addresses for connections. The routed mode system may additionally provide logical paths at a network layer. By using a routed mode, remote sites may be connected using routers over dedicated or switched lines to create Wide Area Networks (WANs). A routed mode system is generally utilized as an interconnection system for connecting individual Local Area Networks (LANs).

The bridged mode system may utilize Ethernet addresses for connections. The bridged mode system may additionally operate in a promiscuous mode at a data link layer. For example, the bridged mode system operates at the level of frames, not signals. A bridged mode system is generally utilized to connect LAN segments within a limited geographic area such as a building or a campus.

Unfortunately, subscribers to connection services for system access cannot conveniently switch between architecture modes of their equipment and architecture modes for accessing the system. For example, a subscriber accessing a network cannot switch between a bridged and a routed mode for accessing the network without additional intervention of a service provider.

### SUMMARY OF THE INVENTION

The present invention provides a method and apparatus for selecting an architecture mode of a system for accessing a network. A request is received at a server from a subscriber. In response to the request, an architecture mode of the system is changed to at least one of a bridged mode and a routed mode. The server may be a web server. Additionally, the system may include a customer premises equipment or a digital subscriber line access multiplexer.

The step of changing the architecture mode may further include replacing a first Internet protocol address with a second Internet protocol address, replacing a first virtual circuit identifier with a second virtual circuit identifier, or replacing a first permanent virtual circuit identifier with a second permanent virtual circuit identifier on the system. The step of changing the architecture mode may further include updating an Internet protocol routing table or an asynchronous transfer mode permanent virtual circuit list. A simple network management protocol server may be infromed of the request. The step of receiving a request may further include receiving the request from a web page that includes a personal identification number entry selection, a routed architectural mode selection or a bridged architectural mode selection.

### BRIEF DESCRIPTION OF THE DRAWINGS

The preferred embodiments of the present invention will be described with reference to the following figures, wherein like numerals designate like elements, and wherein:
Fig. 1 is an exemplary block diagram of a system according to a first embodiment;
Fig. 2 is an exemplary block diagram of a connection unit;
Fig. 3 is an exemplary block diagram of a system according to a second embodiment;
Fig. 4 is an exemplary flowchart outlining the operation of a connection unit;
Fig. 5 illustrates an example interface of a connection unit; and
Fig. 6 illustrates an example data structure of a database.

### DETAILED DESCRIPTION OF PREFERRED EMBODIMENTS

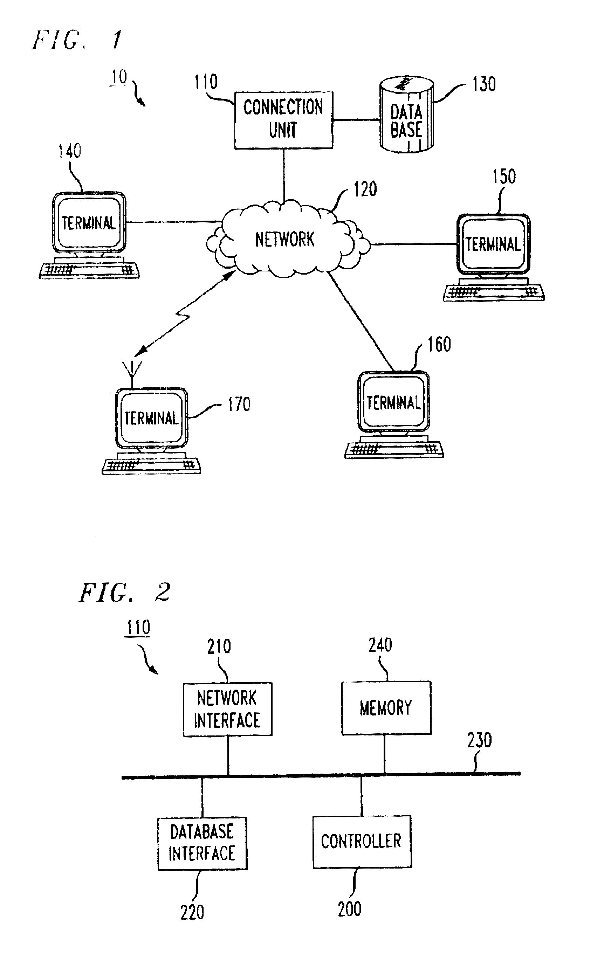

Fig. 1 is an exemplary block diagram of a system 10 according to a first embodiment of the invention. The system 10 includes a connection unit 110, a network 120, a database 130 and one or more terminals 140, 150, 160 and 170. Terminals 140, 150, 160 and 170 may include CPEs, CPE modems, Digital Subscriber Line (DSL) equipment, DSL systems, cable modems, set top boxes, telephones, wireless telephones, cellular telephones, Personal Digital Assistants (PDAs), computer terminals, pagers, fax machines, answering machines or any other device that is capable of sending and receiving data.

In an exemplary embodiment, the connection unit 110 is connected to a network. The network 120 may include any type of network that is capable of sending and receiving communication signals. For example, the network 120 may include a packetized data network, such as the Internet, an Intranet, a LAN, a WAN, a gateway system, a cable packet system, an Asyncronous Transfer Made (ATM) network, other link layer based access network, a network that includes Permanent Virtual Circuits (PVC) or Switched Virtual Circuits and other like communication systems. The network 120 may also include a telecommunications network, such as a local telephone network, long distance telephone network, a plain old telephone service (POTS), a public switched telephone network (PSTN), cellular telephone network, satellite communications network, and other like communications systems. Furthermore, the network 120 may include more than one network and may include a plurality of different types of networks. Thus, the network 120 may include a plurality of data networks, a plurality of telecommunications networks, a combination of data and telecommunications networks and other like communication systems. For illustrative purposes, the invention will be described with references to an ATM network but it is understood that the invention may be implemented with other networks.

In operation, a subscriber may use a terminal 140 to access the connection unit 110 or the connection unit may be present on the terminals. The connection unit 110 may retrieve information from the database 130 corresponding to network 120, the terminals, the subscriber, or other relevant information. The database 130 does not have to be separate from the connection unit 110 and may be integrated into the connection unit 110. The connection unit 110 may contain all relative information for a terminal 140 and the network 120 and the connection unit 110 may communicate with other connection units 110 to obtain relative information for the terminals and the network 120.

The system 10 is not limited to a specific global or local connection unit 110. The system 10 may include a combination of local, semi-global and global connection units that provide for various degrees of communication. Additionally, the connection unit 110 may be autonomous, or stand alone, or the connection unit 110 may be distributed throughout the system 10.

Fig. 2 is an exemplary block diagram of the connection unit 110. The connection unit 110 may include a controller 200, a memory 240, a network interface 210, a database interface 220 and a bus 230. The controller 200 controls the operation of the connection unit 110 and communicates with the network 120 and the terminals 140, 150, 160 and 170 through the network interface 210 and the database 130 via the databases interface 220.

When a subscriber uses terminal 140, for example, to access the connection unit 110, the communication signals are routed by the network 120 to the connection unit 110. The controller 200, through the network interface 210, initiates the gathering of information.

The information may be input by the subscriber into the terminal 140 by any of the various methods well known in the art. For example, the subscriber may use a keypad or keyboard to enter information to the controller 200. Another example would be the use of voice recognition by the controller 200 to decipher and enter spoken network and terminal information.

Once the controller 200 receives an access request from a subscriber, the controller 200 may provide a menu, window, web page, or other useful display to the subscriber's terminal 140. The display may include options for selecting a CPE mode. The CPE mode may include bridged mode and/or a routed mode. The display may include further options such as an option to enter a personal identification number and/or an option that displays a current mode. The display may include any input or output useful for a subscriber of a system.

The controller 200 may wait to receive a selection from the subscriber. The selection may be input through various ways, such as keypad, voice recognition, of the like. Once the selection is received by the controller 200, the controller 200 may act based on the selected menu item.

In an exemplary embodiment, the controller 200 operates in accordance with the invention by receiving a request at a server from a subscriber and changing an architectural mode of a system to at least one of a bridged mode and a routed mode in response to the request. The server may include a web server and the system may include a customer premises equipment or a digital subscriber line access multiplexer.

The controller 200 may further replace an Internet protocol address, a virtual circuit identifier or a permanent virtual circuit identifier on the system. The controller 200 may additionally change the architecture mode by updating an Internet protocol routing table or an asynchronous transfer mode permanent virtual circuit list. The controller 200 may further inform a simple network management protocol server of the request. Additionally, the controller 200 may receive the request from a web page that includes a personal identification number entry selection, a routed architectural mode selection or a bridged architectural mode selection.

The database interface 220 provides access to the database 130 through which information may pass from the database 130 to the controller 200. Similarly, the network interface 210 provides access to the network 120. Through the network interface 210, information may pass between the controller 200 and the terminals 140, 150, 160 and 170 via the network 120. In this exemplary block diagram, the network 120 may comprise only a local bus 230, or it may comprise a more elaborate system such as a LAN, WAN or any other system useful as a network.

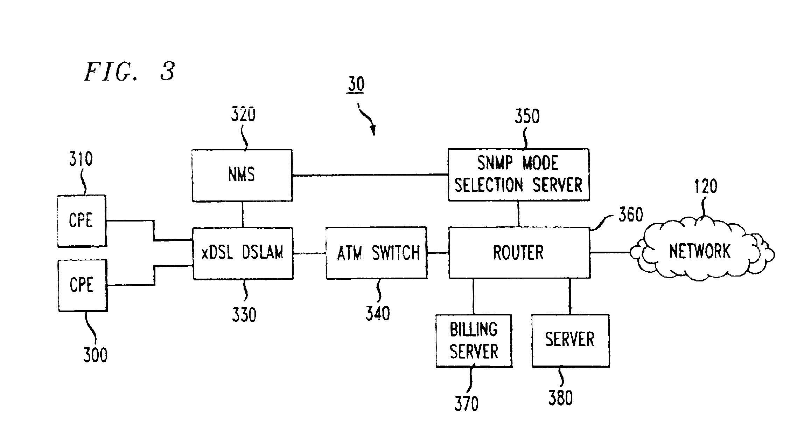

Fig. 3 is an exemplary block diagram of the system 30 according to a second embodiment. The system 30 may include one or more CPEs 300 and 310, a Network Management System (NMS) 320, a xDSL Digital Subscriber Line Access Multiplexer (DSLAM) 330, an Asynchronous Transfer Mode (ATM) switch 340, a Simple Network Management Protocol (SNMP) mode selection server 350, a router 360, a billing server 370, a server 380 and a network 120. The CPEs 300 and 310 may include any combination of the terminals 140, 150, 160 and 170 described above. For example, the CPEs 300 and 310 may include various combinations of xDSL modems such as Asymmetric DSLs, Symmetric DSLs, High speed DSLs and Very high speed DSLs. Additionally, the xDSL DSLAM 330 may be configured to interact with the various xDSL modems. Further DSLAM may include composite system that may include subsystems which constitute component parts which collectively have similar functionality. Various elements of the system 30 may be combined in order to effectuate the connection unit 110 of system 10. Additionally, elements of both system 10 and system 30 may be interchangeable.

In an exemplary embodiment, each CPE is connected to a xDSL DSLAM 330. The xDSL DSLAM 330 may be a network device located in the central office of a service provider. Each CPE may be allocated a specific Ethernet communication port on DSLAM line cards (not shown) on the xDSL DSLAM 330. The line cards and their conditions may be displayed at the SNMP mode selection server 350 and controlled by a network administrator. The line cards may include parameters that may be changed. These parameters may include maximum and minimum modem link rates, Permanent Virtual Circuit (PVC) and Virtual Circuit Identifier (VCI) numbers assigned to each CPE and Quality of Service priorities. Different PVC and VCI numbers may be allocated for different architectural modes of the CPEs 300 and 310.

In operation, the server 380 may receive a request from a subscriber for changing a CPE architectural mode either to a bridged or to a routed mode. The server 380 may provide a service plan that automatically changes the CPE architectural mode in response to the subscriber's request. The subscriber's request may first be addressed to the server 380. The server 380 may then inform the SNMP mode selection server 350 of the request. The SNMP mode selection server 350 may send a message to the NMS 320 through which new VCI and PVC numbers relevant to the new architectural mode are activated on the xDSL DSLAM 330. The SNMP mode selection server 350 may then assign each port in the ATM switch 340 and the router 360 a gateway address and VCI and PVC numbers. The SNMP mode selection server 350 may also inform the router 360 and the ATM switch 340 of the change in the CPE architectural mode. PVC and VCI lists defined on the router 360 and the ATM switch 340 may then be updated according to the request.

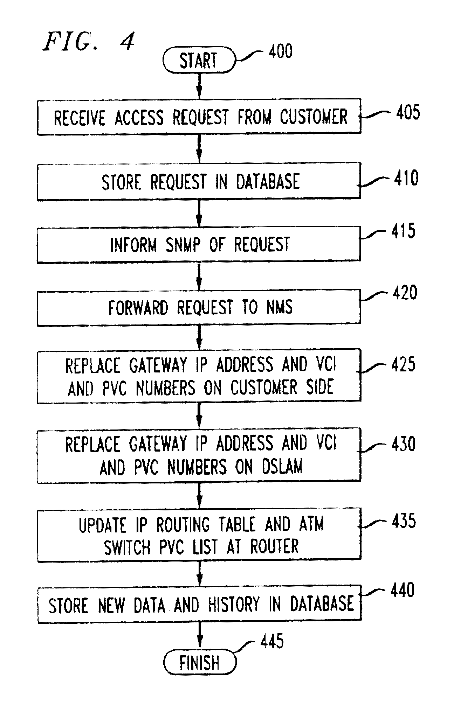

Fig. 4 is an exemplary flowchart outlining the operation of the connection unit 110. Initiation of the process begins in step 400. In step 405, the server 380 may receive an access request from a subscriber that wishes to change an architecture mode at, for example, CPE 310. This request may be supplied through a subscriber interface on a web page that is dynamically generated by the server 380. In step 410 the server 380 may store the request in the database 130. In step 415, the server 380 may inform the SNMP mode selection server 350 of the request. In step 420, the SNMP mode selection server 350 forwards the request to the NMS 320. In step 425, the SNMP mode selection server 350 replaces the gateway IP address and VCI and PVC numbers on the CPE 310 and on any connected systems. In step 430, the SNMP mode selection server 350 replaces the gateway IP address and VCI and PVC numbers on the xDSL DSLAM 330. In step 435, the SNMP mode selection server 350 updates the IP routing table and ATM switch PVC list at the router 360. In step 440, the SNMP mode selection server 350 stores related updated data and the history of architecture mode changes in the database 130. This history may later be used by the billing server 370 for billing subscribers for use of the connection unit 310. In step 445, the flowchart ends.

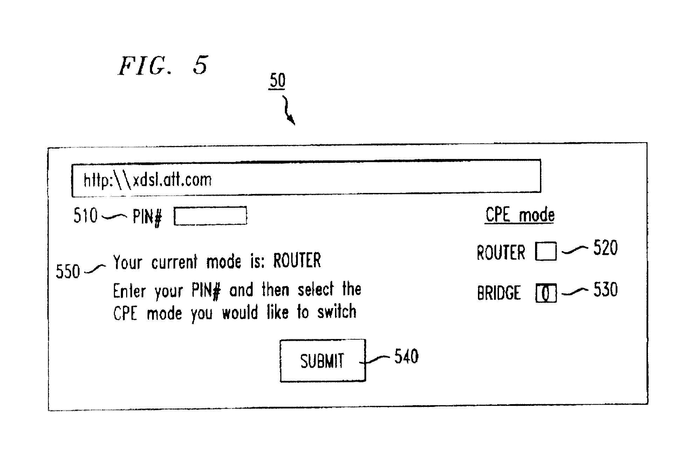

Fig. 5 illustrates an example interface 50 of the connection unit 110. The interface may include a Personal Identification Number (PIN) entry field 510, a router mode check box 520, a bridged mode check box 530, a submit button 540 and a current mode display section 550. The interface 500 may be dynamically generated by the server 380. For example, the interface may be generated by a Common Gateway Interface script, by a servlet, by an Active Server Page, or the like.

In operation, for example, a subscriber or a network administrator may request an immediate change in a CPE architectural mode by using the interface 500. The subscriber may enter a PIN into the PIN entry field 510 for authentication. The subscriber may check either the routed mode check box 520 or the bridged mode check box 530 to select a desired architectural mode. The subscriber may then submit the request to the connection unit 110 by selecting the submit button 540.

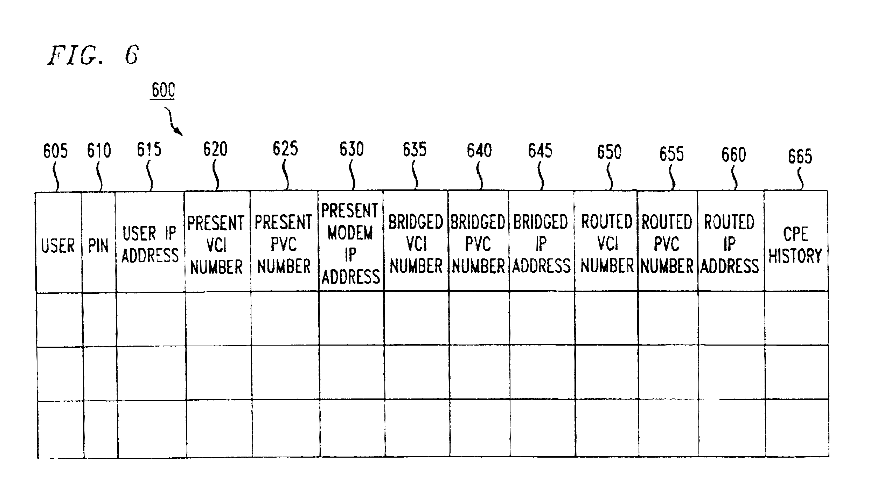

Fig. 6 illustrates an example data structure 60 of the database 130 of Fig. 1. The data structure 60 may include user field 605 which may provide information about an end subscriber who utilizes a CPE; a PIN field 610 which may allow a subscriber to access the connection unit 110; a user IP address field 615 which may designate a current IP address assigned to a subscriber; a present VCI number field 620 and a present PVC number field 625 which both may be used for an assignment of values to an associated port on the xDSL DSLAM 330; a present modem IP address field 630 which may designate a present IP address of a subscriber's CPE; a bridged VCI number field 635, a bridged PVC number field 640 and a bridged IP address field 645 which may be utilized if a subscriber accesses a bridged mode through the connection unit 110; a routed VCI number field 650, a routed PVC number field 655 and a routed IP address field 660 which may be utilized if a subscriber accesses a routed mode through the connection unit 110; and a CPE history field 665 which may be used by the billing server 370 for billing a subscriber for accessing the connection unit 110.

The method of this invention is preferably implemented on a programmed processor. However, connection unit 110 may also be implemented on a general purpose or special purpose computer, a programmed microprocessor or microcontroller and peripheral integrated circuit elements, an ASIC or other integrated circuit, a hardware electronic or logic circuit such as a discrete element circuit, a programmable logic device such as a PLD, PLA, FPGA or PAL, or the like. In general, any device on which resides a finite state machine capable of implementing the flowcharts shown in the Figures may be used to implement the processor functions of this invention.

While this invention has been described with specific embodiments thereof, it is evident that many alternatives, modifications, and variations will be apparent to those skilled in the art. Accordingly, the preferred embodiments of the invention as set forth herein are intended to be illustrative, not limiting. Various changes may be made without departing from the spirit and scope of the invention.

## Claims

1. A method of selecting an architecture mode of a system for accessing a network comprising:
receiving a request at a server from a subscriber; and
changing an architectural mode of the system to at least one of a bridged mode and a routed mode in response to the request.

2. The method of claim 1, wherein the server is a web server.

3. The method of claim 1, wherein the system comprises at least one of a customer premises equipment and a digital subscriber line access multiplexer.

4. The method of claim 1, wherein the step of changing the architecture mode further comprises replacing at least one of an Internet protocol address, a virtual circuit identifier and a permanent virtual circuit identifier on the system.

5. The method of claim 1, wherein the step of changing the architecture mode further comprises updating at least one of an Internet protocol routing table and an asynchronous transfer mode permanent virtual circuit list.

6. The method of claim 1, further comprising informing a simple network management protocol server of the request.

7. The method of claim 2, wherein the step of receiving a request further comprises receiving the request from a web page that includes at least one of a personal identification number entry selection, a routed architectural mode selection and a bridged architectural mode selection.

8. An apparatus for selecting an architecture mode of a system for accessing a network comprising:
a database; and
a controller connected with the database that receives a request at a server from a subscriber and changes an architectural mode of the system to at least one of a bridged mode and a routed mode in response to the request.

9. The apparatus of claim 8, wherein the server is a web server.

10. The apparatus of claim 8, wherein the system comprises at least one of a customer premises equipment and a digital subscriber line access multiplexer.

11. The apparatus of claim 8, wherein the controller changes the architecture mode by replacing at least one of an Internet protocol address, a virtual circuit identifier and a permanent virtual circuit identifier on the system.

12. The apparatus of claim 8, wherein the controller changes the architecture mode by updating at least one of an Internet protocol routing table and an asynchronous transfer mode permanent virtual circuit list.

13. The apparatus of claim 8, wherein the controller further informs a simple network management protocol server of the request.

14. The apparatus of claim 9, wherein the controller receives a request by receiving the request from a web page that includes at least one of a personal identification number entry selection, a routed architectural mode selection and a bridged architectural mode selection.
